# EUROPEAN PATENT APPLICATION

(11) **EP 2 573 335 A2**
(43) Date of publication of application: **27.03.2013**
(21) Application number: 12184198.5
(22) Date of filing: 13.09.2012
(51) Int. Cl.: F01K 23/06

(54) **Waste heat recovery system**

(30) Priority: 21.09.2011 JP 2011206668; 01.06.2012 JP 2012126545
(71) Applicant: Kabushiki Kaisha Toyota Jidoshokki, Kariya-shi, Aichi 448-8671 (JP)
(72) Inventor: Ishiguro, Fumihiko, Kariya-shi,, Aichi 448-8671 (JP); Iguchi, Masao, Kariya-shi,, Aichi 448-8671 (JP); Mori, Hidefumi, Kariya-shi,, Aichi 448-8671 (JP); Enokijima, Fuminobu, Kariya-shi,, Aichi 448-8671 (JP)
(74) Representative: TBK

(57) **Abstract**

The waste heat recovery system includes a Rankine cycle device in which working fluid circulates through a pump, a boiler, an expander and then through a heat exchanging device, heat exchange occurs in the boiler between the working fluid and intake fluid that is introduced into an internal combustion engine while being cooled. The heat exchanging device includes a condenser condensing the working fluid, a receiver connected downstream of the condenser and storing liquid-phase working fluid, a subcooler connected downstream of the receiver and subcooling the liquid-phase working fluid, and a selector device serving to change the ratio of the condenser to the subcooler. The waste heat recovery system further includes a determination device for determining required cooling load for the intake fluid, and a controller for controlling the selector device depending on the required cooling load determined by the determination device.

## Description

### BACKGROUND OF THE INVENTION

The present invention relates to a waste heat recovery system.

Japanese Unexamined Patent Application Publication No. 2008-8224 discloses a waste heat recovery system used with a power unit and having a Rankine cycle device in which working fluid circulates. The power unit has an internal combustion engine and a turbocharger. The turbocharger supplies compressed air to the engine. The Rankine cycle device has a pump, a compressed air boiler, a coolant boiler, an expander, a condenser and a tube. Working fluid is circulated through the pump, the compressed air boiler, the coolant boiler, the expander and the condenser which are connected by the tube.

Japanese Unexamined Patent Application Publication No. 2007-239513 discloses another waste heat recovery system used with a power unit and having a Rankine cycle device in which working fluid circulates. The power unit has an internal combustion engine and an exhaust gas recirculation passage through which part of the exhaust gas exiting the engine is recirculated into the engine as recirculation exhaust gas. The Rankine cycle device has a pump, an exhaust gas boiler, an expander, a condenser and a tube. In the exhaust gas boiler, the working fluid is heated by heat exchange with recirculation exhaust gas. Working fluid is circulated through the pump, the exhaust gas boiler, the expander and then the condenser which are connected by the tube.

In such waste heat recovery systems, since the recirculation exhaust gas and the compressed air both have a high temperature, the working fluid can be suitably heated by heat exchange in the exhaust gas boiler and the compressed air boiler. This offers increased recovery of energy in the Rankine cycle device.

In addition, the waste heat recovery system wherein the compressed air boiler functions as an intercooler for the compressed air and the exhaust gas boiler functions as a cooling device for the recirculation exhaust gas requires no additional intercooler and cooling device, thus resulting in reduced size and simplified structure of the waste heat recovery system.

The above-described compressed air and recirculation exhaust gas, that is, the intake fluid, should preferably be introduced into the internal combustion engine while being cooled. This is because the cooling of the compressed air results in increased output of the internal combustion engine and also because the cooling of the recirculation exhaust gas results in reduction of nitrogen oxides in exhaust gas discharged into the atmosphere.

In the above-described waste heat recovery systems, however, it is difficult to sufficiently cool the intake fluid such as compressed air or recirculation exhaust gas because the condenser is connected directly to the pump and hence the temperature of the working fluid entering the compressed air boiler or of the working fluid entering the exhaust gas boiler is approximate to the condensation temperature.

To solve such problem, a receiver and a subcooler may be provided between the condenser and the pump. By doing so, the working fluid flowing downstream of the condenser is certainly liquefied by the receiver, and the liquefied working fluid is cooled by the subcooler. Thus, the temperature of the working fluid entering the compressed air boiler and the exhaust gas boiler can be certainly lowered, thereby allowing suitable cooling of compressed air and recirculation exhaust gas.

In such case, however, only a given amount of heat is released from the condenser and the subcooler regardless of the output of the engine, with the result that the working fluid may be cooled excessively and the recovery of energy in the Rankine cycle device may be reduced. When compressed air or recirculation exhaust gas need to be cooled further in order to increase engine output, in other words, when the required cooling load for the compressed air or the recirculation exhaust gas is high, the compressed air and the recirculation exhaust gas cannot be cooled to the desired temperature level, which may results in reduced performance of the engine.

The present invention is directed to providing a waste heat recovery system that can selectively give priority to increasing the recovery of energy in the Rankine cycle device or increasing the performance of the engine.

### SUMMARY OF THE INVENTION

In accordance with an aspect of the present invention, a waste heat recovery system is for use with a power unit that includes an internal combustion engine. The waste heat recovery system includes a Rankine cycle device in which working fluid circulates through a pump, a boiler, an expander and then through a heat exchanging device, heat exchange occurs in the boiler between the working fluid and intake fluid that is introduced into the internal combustion engine while being cooled. The heat exchanging device includes a condenser condensing the working fluid, a receiver connected downstream of the condenser and storing liquid-phase working fluid, a subcooler connected downstream of the receiver and subcooling the liquid-phase working fluid, and a selector device serving to change the ratio of the condenser to the subcooler. The waste heat recovery system further includes a determination device for determining required cooling load for the intake fluid, and a controller for controlling the selector device depending on the required cooling load determined by the determination device.

Other aspects and advantages of the invention will become apparent from the following description, taken in conjunction with the accompanying drawings, illustrating by way of example the principles of the invention.

### BRIEF DESCRIPTION OF THE DRAWINGS

Fig. 1 is a schematic view of a waste heat recovery system according to a first embodiment of the present invention;
Fig. 2 is a schematic view showing the operation of the waste heat recovery system of Fig. 1 when working fluid enters a receiver from a position downstream of a second heat exchanger;
Fig. 3 is similar to Fig. 2, but showing the operation of the waste heat recovery system when working fluid enters the receiver from a position downstream of a first heat exchanger;
Fig. 4 is a schematic view of a second embodiment of the waste heat recovery system according to the present invention;
Fig. 5 is a schematic view showing the operation of the waste heat recovery system of Fig. 4 when working fluid enters a second receiver;
Fig. 6 is similar to Fig. 5, but showing the operation of the waste heat recovery system when working fluid enters a first receiver;
Fig. 7 is a schematic view of a third embodiment of the waste heat recovery system according to the present invention;
Fig. 8 is a sectional view showing the operation of a subcool condenser of the waste heat recovery system of Fig. 7 when the required output of a power unit is low;
Fig. 9 is similar to Fig. 8, but showing the operation of the subcool condenser when the required output of the power unit is high;
Fig. 10 is a schematic view of a fourth embodiment of the waste heat recovery system according to the present invention;
Fig. 11 is a sectional view showing the operation of a subcool condenser of the waste heat recovery system of Fig. 10 when the required output of a power unit is low;
Fig. 12 is similar to Fig. 11, but showing the operation of the subcool condenser when the required output of the power unit is high; and
Fig. 13 is a schematic view of a fifth embodiment of the waste heat recovery system according to the present invention.

### DETAILED DESCRIPTION OF THE EMBODIMENTS

The following will describe the embodiments of the waste heat recovery system according to the present invention with reference to the accompanying drawings.

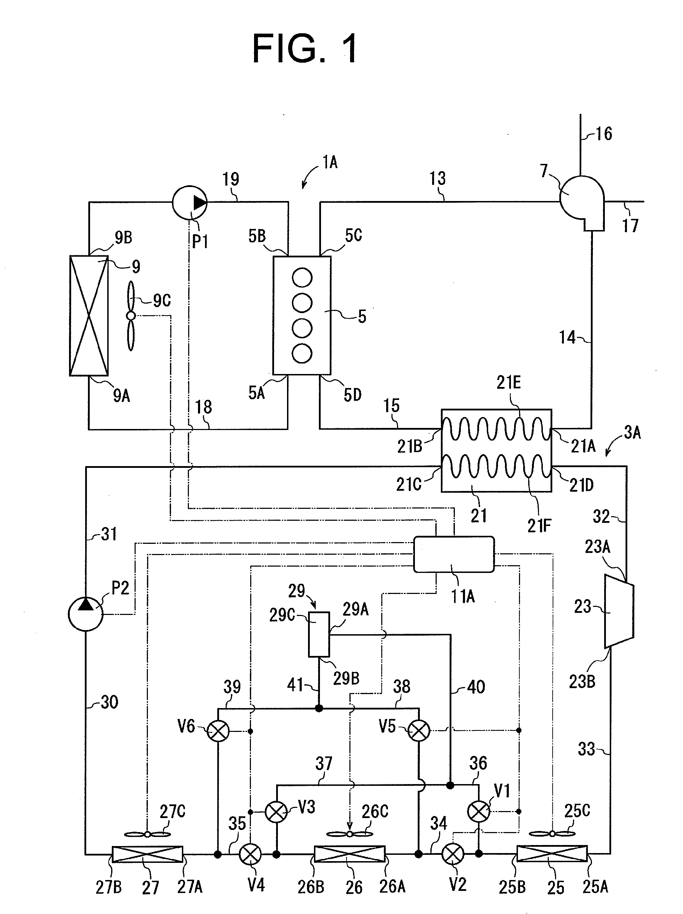

Referring to Fig. 1, the waste heat recovery system of the first embodiment is installed in a vehicle and used with a power unit 1A of the vehicle. The waste heat recovery system includes a Rankine cycle device 3A and a controller 11A. The controller 11A corresponds to the determination device of the present invention.

The power unit 1A has an internal combustion engine 5, a turbocharger 7 as a forced-induction compressor, and a radiator 9. The engine 5 is a conventional water-cooled gasoline engine having a water jacket (not shown) through which coolant flows. The engine 5 has an inlet 5B and an outlet 5A through which coolant flows into and out of the water jacket. The engine 5 further has an outlet 5C for discharging exhaust gas and an inlet 5D for introducing compressed air.

The turbocharger 7 and the radiator 9 are of a widely used type. The turbocharger 7 is driven by the exhaust gas exiting the engine 5 to compress the intake air. Compressed air is supplied as intake fluid to the engine 5. The radiator 9 has an inlet 9A and an outlet 9B through which engine coolant flows into and out of the radiator 9. In the radiator 9, heat exchange occurs between the coolant flowing therein and the air outside the vehicle or outdoor air. A motor fan 9C is provided adjacent to the radiator 9 and electrically connected to the controller 11A.

The engine 5 and the turbocharger 7 are connected by tubes 13 to 15. The tubes 14, 15 through which compressed air flows are connected to a boiler 21 of the Rankine cycle device 3A which is described in detail below. The boiler 21 has a first inlet 21A and a first outlet 21B. The tube 13 through which exhaust gas flows is connected to the outlet 5C of the engine 5 and the turbocharger 7. The tube 14 is connected to the turbocharger 7 and the first inlet 21A of the boiler 21. The tube 15 is connected to the first outlet 21B of the boiler 21 and the inlet 5D of the engine 5.

The turbocharger 7 is connected also to tubes 16, 17. Although not shown in the drawing, the tube 16 is connected to a muffler of the vehicle and the tube 17 is connected to an air intake. The tube 16 is connected through the turbocharger 7 to the tube 13. The tube 17 is connected through the turbocharger 7 to the tube 14.

The engine 5 and the radiator 9 are connected by tubes 18, 19 through which coolant flows. The tube 18 is connected to the outlet 5A of the engine 5 and the inlet 9A of the radiator 9. The tube 19 is connected to the outlet 9B of the radiator 9 and the inlet 5B of the engine 5. An electrically operated first pump P1 is provided in the tube 19 and electrically connected to the controller 11A. The first pump P1 may be provided in the tube 18.

The Rankine cycle device 3A includes the boiler 21, an electrically operated second pump P2, an expander 23, a first heat exchanger 25, a second heat exchanger 26, a third heat exchanger 27, a receiver 29, tubes 30 to 41, and valves V1 to V6. The tubes 30 to 41 cooperate to form a fluid circuit through which HFC134a refrigerant as working fluid flows.

The second pump P2 is electrically connected to the controller 11A and corresponds to the pump of the present invention. The tubes 36 to 39 and the valves V1 to V6 correspond to the selector device of the present invention. The tubes 34, 35 correspond to the first and second connecting tubes, respectively, of the present invention. The tubes 36, 37 correspond to the first and second branch tubes, respectively, of the present invention. The tubes 38, 39 correspond to the first and second return tubes, respectively, of the present invention. The valves V1, V2 correspond to the first branch valve and the first connecting valve, respectively, of the present invention. The valves V3, V4 correspond to the second branch valve and the second connecting valve, respectively, of the present invention. The valves V5, V6 correspond to the first return valve and the second return valve, respectively, of the present invention.

The boiler 21 has a second inlet 21C and a second outlet 21D, as well as the first inlet 21A and first outlet 21B. The boiler 21 is formed therein with a first passage 21E connecting between the first inlet 21A and the first outlet 21B and a second passage 21F connecting between the second inlet 21C and the second outlet 21D. In the boiler 21, heat exchange occurs between the compressed air flowing in the first passage 21E and the working fluid flowing in the second passage 21F, so that the compressed air is cooled and the working fluid is heated.

The expander 23 has an inlet 23A and an outlet 23B through which working fluid flows into and out of the expander 23. The working fluid heated by the boiler 21 is expanded in the expander 23 to generate mechanical rotation power. The generated mechanical rotation power is used to generate electric power in a dynamo (not shown) connected to the expander 23. The generated electric power is stored in a battery (not shown).

The first heat exchanger 25 has an inlet 25A and an outlet 25B through which working fluid flows into and out of the first heat exchanger 25. In the first heat exchanger 25, the working fluid expanded and evaporated in the expander 23 is cooled and liquefied by heat exchange with the outdoor air. The first heat exchanger 25 functions as a condenser of working fluid. An electrically operated fan 25C is provided adjacent to the first heat exchanger 25 and electrically connected to the controller 11A.

The second and third heat exchangers 26, 27 are similar in structure to the first heat exchanger 25. The second heat exchanger 26 has an inlet 26A and an outlet 26B through which working fluid flows into and out of the second heat exchanger 26. The third heat exchanger 27 has an inlet 27A and an outlet 27B through which working fluid flows into and out of the third heat exchanger 27. Electrically operated fans 26C, 27C are provided adjacent to the second and third heat exchangers 26, 27, respectively, and electrically connected to the controller 11A.

In the Rankine cycle device 3A, the second heat exchanger 26 functions as a condenser and also as a subcooler, depending on the position of the second heat exchanger 26 relative to the receiver 29. The third heat exchanger 27 functions as a subcooler.

The receiver 29 has an inlet 29A and an outlet 29B through which working fluid flows into and out of the receiver 29. The receiver 29 is formed therein with a reservoir chamber 29C. Working fluid flowed into the receiver 29 through the inlet 29A is separated into vapor-phase fluid and liquid-phase fluid. Liquid phase working fluid is temporarily stored in the reservoir chamber 29C and then flows out of the receiver 29 through the outlet 29B.

The second pump P2, the boiler 21, the expander 23 and the first to third heat exchangers 25, 26, 27 are connected by the tubes 30 to 41. Specifically, the tube 30 connects between the outlet 27B of the third heat exchanger 27 and the second pump P2. The tube 31 connects between the second pump P2 and the second inlet 21C of the boiler 21. The tube 32 connects between the second outlet 21D of the boiler 21 and the inlet 23A of the expander 23. The tube 33 connects between the outlet 23B of the expander 23 and the inlet 25A of the first heat exchanger 25. The tube 34 connects between the outlet 25B of the first heat exchanger 25 and the inlet 26A of the second heat exchanger 26. The tube 35 connects between the outlet 26B of the second heat exchanger 26 and the inlet 27A of the third heat exchanger 27.

One ends of the tubes 36, 38 are connected to the tube 34, and one ends of the tubes 37, 39 are connected to the tube 35. The other ends of the tubes 36, 37 are connected to one end of the tube 40. The other end of the tube 40 is connected to the inlet 29A of the receiver 29. The other ends of the tubes 38, 39 are connected to one end of the tube 41. The other end of the tube 41 is connected to the outlet 29B of the receiver 29.

In the Rankine cycle device 3A, the second pump P2 is operated to circulate working fluid through the tubes 30 to 41. Working fluid discharged from the second pump P2 flows through the boiler 21 and the expander 23 and enters the first heat exchanger 25. Working fluid finally flows through the third heat exchanger 27 and enters the second pump P2 again.

As seen in the flowing direction of working fluid in the Rankine cycle device 3A, the boiler 21 is located downstream of the second pump P2 and the expander 23 is located downstream of the boiler 21. The first heat exchanger 25 is located in series downstream of the expander 23, and the second heat exchanger 26 is located in series downstream of the first heat exchanger 25. The third heat exchanger 27 is located in series downstream of the second heat exchanger 26, and the second pump P2 is located downstream of the third heat exchanger 27.

Each of the valves V1 to V6 is operable to selectively allow or block the flow of working fluid therethrough. The valves V1 to V6 are electrically connected to the controller 11 a.

The valve V1 is provided in the tube 36. The valve V2 is provided in the tube 34 at a position downstream of the tube 36 and also upstream of the tube 38. The valve V3 is provided in the tube 37. The valve V4 is provided in the tube 35 at a position downstream of the tube 37 and also upstream of the tube 39. The valve V5 is provided in the tube 38, and the valve V6 is provided in the tube 39.

The controller 11A controls the operation of the fans 9C, 25C, 26C, 27C so as to properly adjust the amount of heat released from the coolant and working fluid into the outdoor air. The controller 11A controls also the operation of the first and second pumps P1, P2. The controller 11A monitors the accelerator pedal position of the vehicle using a signal, for example, from an electric control unit or ECU (not shown) of the vehicle. Based on the monitored accelerator pedal position, the controller 11Adetermines the required output of the engine 5. Based on the required output of the engine 5, the controller 11A then determines the required cooling load for compressed air. Based on the determined required cooling load, the controller 11A adjusts the respective valves V1 to V6. The inlet 29A of the receiver 29 is selectively connected to the tube 34 or to the tube 35 depending on the operations of the valves V1 to V6. The controller 11A also functions as a sensor for monitoring required output of the engine 5.

The following will describe the operation of the waste heat recovery system of the present embodiment.

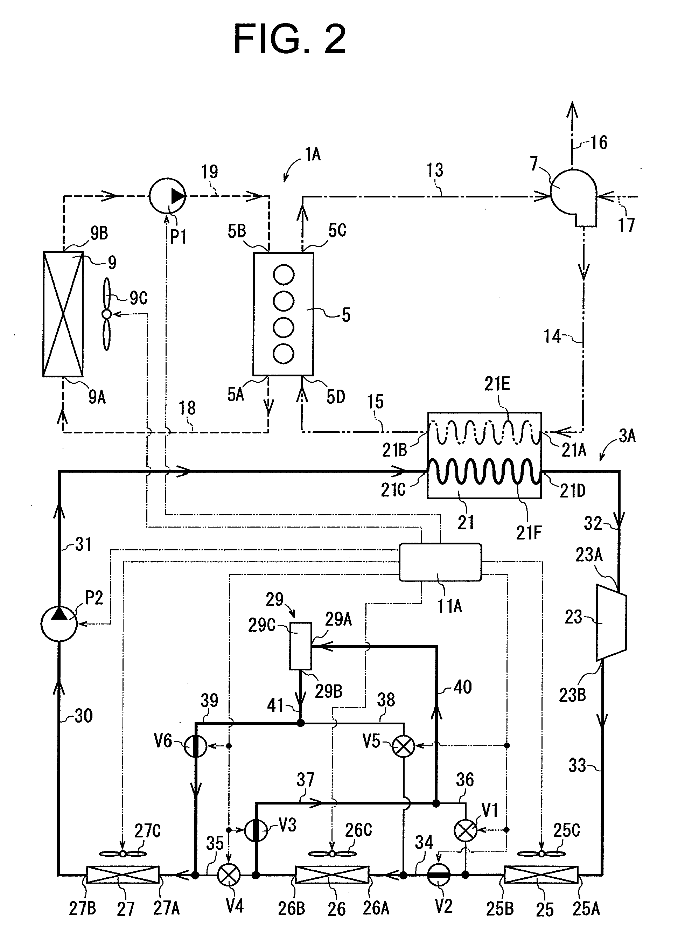

Referring to Fig. 2, while the engine 5 of the power unit 1A is operating to drive the vehicle, exhaust gas exiting the outlet 5C of the engine 5 is delivered through the tube 13, the turbocharger 7 and the tube 16 and discharged from the muffler (not shown) into the outdoor air. The turbocharger 7 is driven by the exhaust gas, so that the outdoor air is drawn through the tube 17 into the turbocharger 7 and then compressed therein. Compressed air is delivered through the tube 14, the first passage 21E of the boiler 21 and the tube 15 and then introduced into the engine 5 through the inlet 5D.

The controller 11A operates the first and second pumps P1, P2 and the fans 9C, 25C, 26C, 27C. In the power unit 1A, coolant exiting the engine 5 through the outlet 5A after cooling the engine 5 flows through the tube 18 and enters the radiator 9 through the inlet 9A. Coolant flowing in the radiator 9 is cooled by heat exchange with the surrounding air. The controller 11A controls the operation of the fan 9C so that coolant is suitably cooled. Cooled coolant exiting the radiator 9 through the outlet 9B flows through the tube 19 and enters the engine 5 through the inlet 5B to be used to cool the engine 5.

In the Rankine cycle device 3A, the controller 11A controls the valves V1 to V6. If the required output of the engine 5, that is, the monitored accelerator pedal position is below a predetermined value, the controller 11A determines that the required cooling load for the compressed air is below a predetermined threshold. In this case, the controller 11A causes the valves V2, V3, V6 to be opened and the valve V1, V4, V5 to be closed. By doing so, the tubes 37, 39 are connected to the tube 35, while the tubes 36, 38 are disconnected from the tube 34, so that the inlet 29A of the receiver 29 is connected to the tube 35.

Working fluid discharged from the second pump P2 flows in the tube 31 and then enters through the second inlet 21C into the second passage 21F of the boiler 21, where heat exchange occurs between the working fluid and the compressed air flowing through the first passage 21E of the boiler 21. Since the compressed air after exiting the turbocharger 7 has a temperature of about 150 degrees C, the working fluid flowing through the second passage 21F is heated to a level of a certain range. The compressed air flowing in the first passage 21E is cooled by releasing heat to the working fluid flowing in the second passage 21F, and then delivered to the engine 5.

After being heated by the boiler 21, high-temperature and high-pressure working fluid exiting the second outlet 21D flows through the tube 32 and enters the expander 23 through its inlet 23A. The working fluid is decompressed or expanded in the expander 23 thereby to generate pressure energy that is used to generate electric power in the dynamo connected to the expander 23.

After being decompressed in the expander 23, the working fluid exiting the outlet 23B and flowing through the tube 33 then enters the first heat exchanger 25 through its inlet 25A. The working fluid is cooled in the first heat exchanger 25 by releasing heat to the surrounding air. The controller 11A controls the fan 25C so that the working fluid is suitably cooled. The cooled working fluid exiting the outlet 25B and flowing through the tube 34 then enters the second heat exchanger 26 through its inlet 26A.

Working fluid is further cooled in the second heat exchanger 26 by heat exchange with the surrounding air. In this case, the controller 11A controls the operation of the fan 26C so that working fluid is suitably cooled. Cooled working fluid exiting the second heat exchanger 26 through the outlet 26B flows from the tube 35 into the tube 37. Then the working fluid flows in the tube 40 and enters the receiver 29 through the inlet 29A. In the receiver 29, working fluid is separated into vapor phase fluid and liquid phase fluid, and liquid phase working fluid is stored in the reservoir chamber 29C. Liquid phase working fluid exiting the receiver 29 through the outlet 29B flows through the tubes 41, 39 into the tube 35 and then enters the third heat exchanger 27 through the inlet 27A. That is, the working fluid exiting the outlet 26B of the second heat exchanger 26 enters the third heat exchanger 27 while bypassing the valve V4 provided in the tube 35.

Working fluid is further cooled in the third heat exchanger 27 by heat exchange with the surrounding air. In this case, the controller 11A controls the operation of the fan 27C so that working fluid is suitably cooled. The third heat exchanger 27 cools the working fluid liquefied in the receiver 29. In this case, the first and second heat exchangers 25, 26 function as a condenser, and the third heat exchanger 27 functions as a subcooler. Cooled working fluid exiting the outlet 27B of the third heat exchanger 27 flows through the tube 31 and enters the boiler 21 again.

If the required output of the engine 5, that is, the monitored accelerator pedal position exceeds a predetermined value, the required cooling load for compressed air is high. This is because it is necessary to increase the density of compressed air by further cooling the compressed air in the boiler 21 in order to supply a larger amount of compressed air to the engine 5 and hence to increase the output of the engine 5. If the controller 11A determines based on the required output of the engine 5 that the required cooling load for compressed air exceeds the threshold, the controller 11A controls the valves V1 to V6 so that the valves V1, V4, V5 are opened while the valve V2, V3, V6 are closed. By doing so, the tubes 36, 38 are connected to the tube 34, while the tubes 37, 39 are disconnected from the tube 35, so that the inlet 29A of the receiver 29 is connected to the tube 34.

Cooled working fluid exiting the outlet 25B of the first heat exchanger 25 flows from the tube 34 into the tube 36. Then the working fluid flows in the tube 40 and enters the receiver 29 through its inlet 29A. Liquid phase working fluid exiting the outlet 29B of the receiver 29 flows through the tubes 41, 38 into the tube 34 and then enters the inlet 26A of the second heat exchanger 26. That is, working fluid exiting the outlet 25B of the first heat exchanger 25 enters the second heat exchanger 26 while bypassing the valve V2 provided in the tube 34.

Working fluid is further cooled in the second heat exchanger 26 by heat exchange with the surrounding air. The second heat exchanger 26 cools the working fluid liquefied in the receiver 29. Cooled working fluid exiting the outlet 26B of the second heat exchanger 26 flows through the tube 35 and enters the third heat exchanger 27 through its inlet 27A, where the working fluid is further cooled.

In this case, the first heat exchanger 25 functions as a condenser, and the second and third heat exchangers 26, 27 function as a subcooler. As compared to the case of Fig. 2, the working fluid is further cooled to a temperature that is approximate to the outdoor temperature.

In the above-described Rankine cycle device 3A of the waste heat recovery system, the working fluid is heated in the boiler 21 by heat exchange with the compressed air, while the compressed air exiting the turbocharger 7 is efficiently cooled by releasing its heat to the working fluid. In the waste heat recovery system, the boiler 21 functions as an intercooler for the compressed air, allowing a larger amount of compressed air to be supplied to the engine 5.

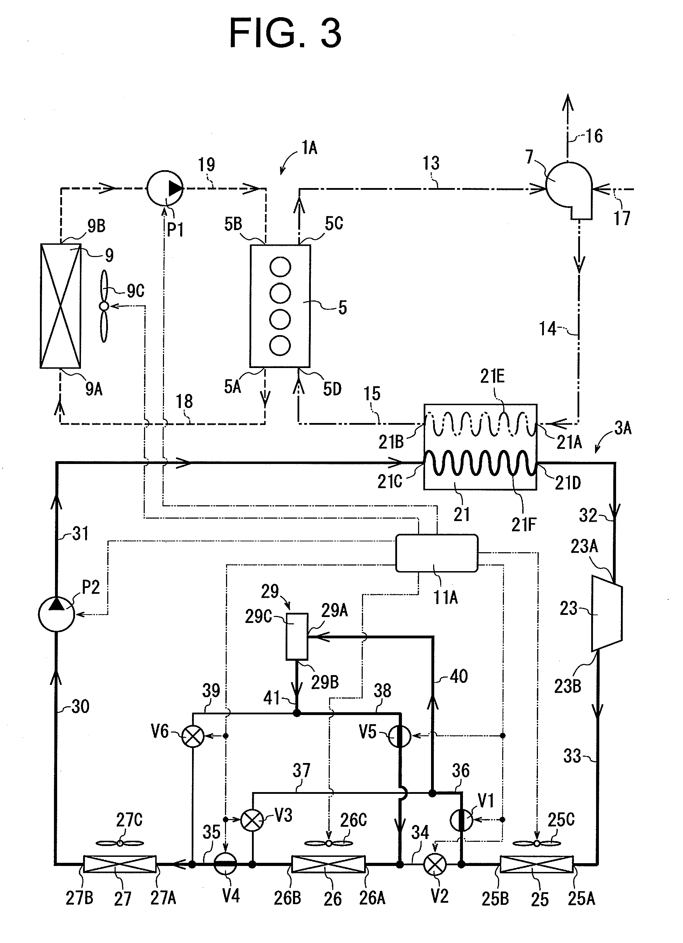

The Rankine cycle device 3A of the waste heat recovery system has the first, second and third heat exchangers 25 to 27, the receiver 29, the tubes 36 to 39 and the valves V1 to V6. The first, second and third heat exchangers 25 to 27 are located downstream of the expander 23 and upstream of the second pump P2. The first, second and third heat exchangers 25 to 27 are connected in series by the tubes 30 and 33 to 35. The controller 11A controls the valves V1 to V6 depending on the required cooling load for the compressed air and is operable to selectively connect the receiver 29 to the tube 34 downstream of the first heat exchanger 25 or to the tube 35 downstream of the second heat exchanger 26. When the second heat exchanger 26 is upstream of the receiver 29 as shown in Fig. 2, the first and second heat exchangers 25, 26 function as a condenser, and the third heat exchanger 27 functions as a subcooler. On the other hand, when the second heat exchanger 26 is downstream of the receiver 29 as shown in Fig. 3, the first heat exchanger 25 functions as a condenser, and the second and third heat exchangers 26, 27 function as a subcooler.

If the required output of the engine 5 is low, the temperature of the compressed air does not to need to be so lowered in order to supply compressed air to the engine 5 depending on the required output of the engine 5. In other words, in the Rankine cycle device 3A, the temperature of the working fluid entering the boiler 21 does not need to be so lowered. Thus, if the controller 11A determines that the required cooing load for compressed air is below the threshold, the controller 11A controls the valves V1 to V6 in the manner as in the case of Fig. 2 so that the first and second heat exchangers 25, 26 function as the condenser. By doing so, the number of heat exchangers functioning as the condenser is increased, while the number of heat exchangers functioning as the subcooler is decreased, as compared to the case of Fig. 3. That is, subcooling is done only by the third heat exchanger 27, and accordingly the ratio of condenser is larger than that of subcooler in the state of the waste heat recovery system as shown in Fig. 2. This prevents excessive cooling of the working fluid and allows increased recovery of electric power in the Rankine cycle device 3A.

If the controller 11A determines that the required output of the engine 5 is high and hence the required cooing load for compressed air exceeds the threshold, the controller 11A controls the valves V1 to V6 in the manner as in the case of Fig. 3. By doing so, the working fluid present downstream of the condenser or the first heat exchanger 25 is liquefied by the receiver 29 and then subcooled by the subcooler or the second and third heat exchangers 26, 27. In this case, the ratio of subcooler is larger than that of condenser, and in the second and third heat exchangers 26, 27 the liquefied working fluid can be cooled to a temperature that is approximate to the outdoor air temperature. Thus, the temperature of the working fluid entering the boiler 21 can be sufficiently lowered and the compressed air can be cooled suitably, thus the required cooling load being met even when the required cooling load for compressed air is high. Furthermore, the output of the engine 5 can be increased and the required output of the engine 5 can be met. In this case, since only the first heat exchanger 25 functions as the condenser, the amount of electric power recovered in the Rankine cycle device 3A is decreased.

The waste heat recovery system of the present embodiment makes it possible for the controller 11A to properly determine the required cooling load for compressed air based on the required output of the engine 5.

Thus, the waste heat recovery system of the first embodiment can selectively give priority to increasing the recovery of electric power in the Rankine cycle device 3A or increasing the output of the engine 5.

In addition, the use of the tubes 36 to 39 and the valves V1 to V6 as the selector device results in simplified structure and reduced manufacturing cost of the waste heat recovery system.

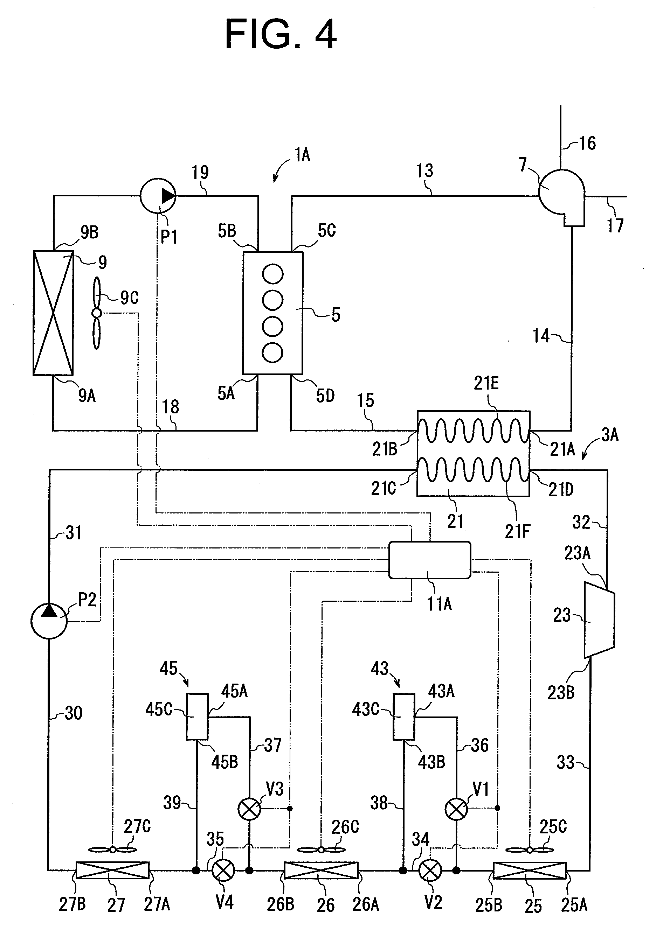

Figs. 4, 5 and 6 show the second embodiment of the waste heat recovery system according to the present invention. As shown in Fug. 4, the Rankine cycle device 3A of the second embodiment includes the second pump P2, the boiler 21, the expander 23, the first, second and third heat exchangers 25 to 27, a first receiver 43, a second receiver 45, the tubes 30 to 39, and the valves V1 to V4. The tubes 36 to 39 and the valves V1 to V4 correspond to the selector device of the present invention.

The first and second receivers 43, 45 are similar in structure to the receiver 29 of the first embodiment. The first receiver 43 has an inlet 43A and an outlet 43B through which working fluid flows into and out of the first receiver 43. The second receiver 45 has an inlet 45A and an outlet 45B through which working fluid flows into and out of the second receiver 45. The first and second receivers 43, 45 are formed therein with reservoir chambers 43C, 45C, respectively.

One ends of the tubes 36, 38 are connected to the tube 34, and one ends of the tubes 37, 39 are connected to the tube 35. The other end of the tube 36 is connected to the inlet 43A of the first receiver 43. The other end of the tube 37 is connected to the inlet 45A of the second receiver 45. The other end of the tube 38 is connected to the outlet 43B of the first receiver 43. The other end of the tube 39 is connected to the outlet 45B of the second receiver 45.

The valve V1 is provided in the tube 36. The valve V2 is provided in the tube 34 at a position downstream of the tube 36 and also upstream of the tube 38. The valve V3 is provided in the tube 37. The valve V4 is provided in the tube 35 at a position downstream of the tube 37 and also upstream of the tube 39. Other elements or components of the waste heat recovery system are similar to their counterpart elements or components of waste heat recovery system of the first embodiment. Same reference numerals are used for the common elements or components in the first and second embodiments, and the description of such elements or components for the second embodiment will be omitted.

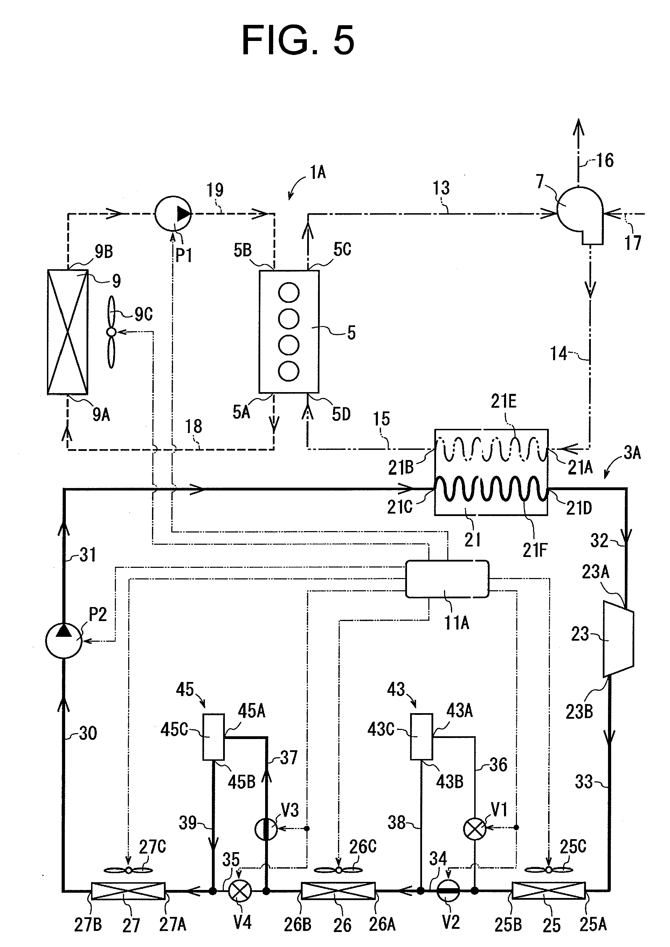

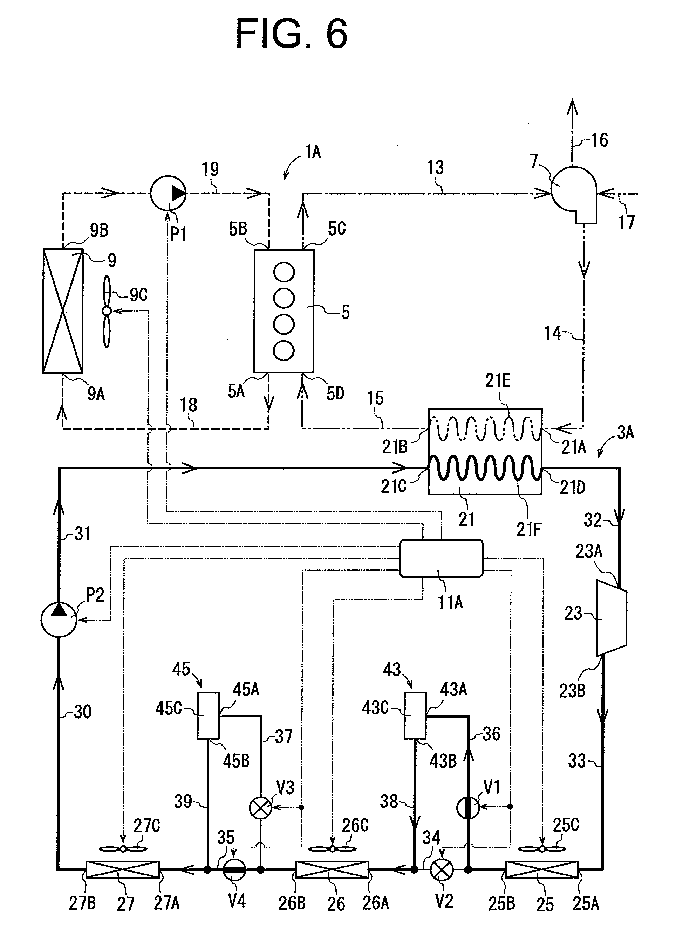

In the waste heat recovery system of the second embodiment, if the controller 11A determines that the required output of the engine 5 is low and the required cooling load for the compressed air is below a predetermined threshold, the controller 11A causes the valves V2, V3 to be opened and the valve V1, V4 to be closed, as shown in Fig. 5. Working fluid after being cooled in the first and second heat exchangers 25, 26 flows from the tube 35 into the tube 37, and then enters the second receiver 45 through the inlet 45A. Liquid phase working fluid exiting the second receiver 45 through the outlet 45B flows through the tube 39 into the tube 35, and then enters the third heat exchanger 27 through the inlet 27A. That is, the working fluid exiting the outlet 26B of the second heat exchanger 26 enters the third heat exchanger 27 while bypassing the valve V4 provided in the tube 35. In this case, the first and second heat exchangers 25, 26 function as a condenser, and the third heat exchanger 27 functions as a subcooler. Thus, the ratio of condenser is larger than that of subcooler, as compared to the case of Fig. 6 which is described below. This prevents excessive cooling of the working fluid and allows increased recovery of electric power in the Rankine cycle device 3A.

If the controller 11A determines that the required output of the engine 5 is high and the required cooling load for compressed air exceeds the threshold, the controller 11Acauses the valves V1, V4 to be opened and the valve V2, V3 to be closed, as shown in Fig. 6. By doing so, the tube 36 is connected to the tube 34, while the tube 37 is disconnected from the tube 35, so that the inlet 43A of the first receiver 43 is connected to the tube 34.

Working fluid after being cooled in the first heat exchanger 25 flows from the tube 34 into the tube 36, and then enters the first receiver 43 through its inlet 43A. Liquid phase working fluid exiting the outlet 43B of the first receiver 43 flows through the tube 38 into the tube 34, and then enters the inlet 26A of the second heat exchanger 26. That is, working fluid exiting the outlet 25B of the first heat exchanger 25 enters the second heat exchanger 26 while bypassing the valve V2 provided in the tube 34. Working fluid after being cooled in the second heat exchanger 26 is further cooled in the third heat exchanger 27.

In the case of Fig. 6, the first heat exchanger 25 functions as a condenser, and the second and third heat exchangers 26, 27 function as a subcooler, as in the case of Fig. 3. The ratio of subcooler is larger than that of condenser as compared to the case of Fig. 5, and the working fluid is cooled to a temperature that is approximate to the outdoor temperature. Thus, the compressed air can be cooled sufficiently in the boiler 21, thereby allowing a larger amount of compressed air to be supplied to the engine 5 and resulting in an increased output of the engine 5. The required cooling load can be met even when the required output of the engine 5 is high and the required cooling load for compressed air is high. The second embodiment also provides the advantages similar to those of the first embodiment.

Thus, also the waste heat recovery system of the second embodiment can selectively give priority to increasing the recovery of electric power in the Rankine cycle device 3A or increasing the output of the engine 5.

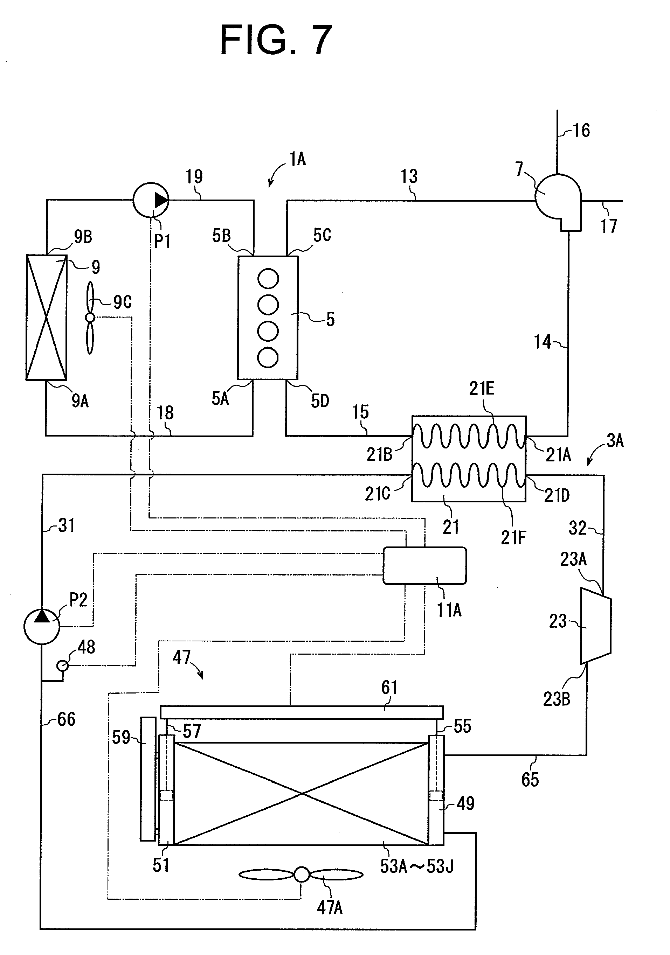

Figs. 7, 8 and 9 show the third embodiment of the waste heat recovery system according to the present invention. The third embodiment differs from the first embodiment in that a subcool condenser 47 is used instead of the first to third heat exchangers 25 to 27, the receiver 29, and the valves V1 to V6 of the first embodiment. An electrically operated fan 47A is provided adjacent to the subcool condenser 47 and electrically connected to the controller 11A. The waste heat recovery system of the third embodiment further has a temperature and pressure sensor 48.

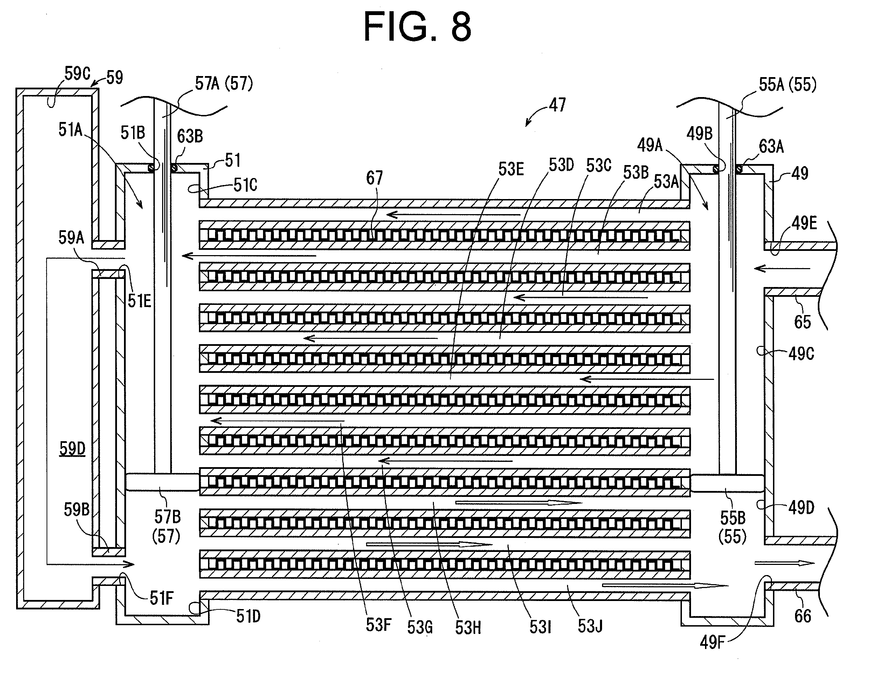

The subcool condenser 47 is connected to the outlet 23B of the expander 23 through a tube 65 and also to the second pump P2 through a tube 66. As shown in Figs. 7 and 8, the subcool condenser 47 has vertically extending first and second heads 49, 51, tubes 53A to 53J extending horizontally between the first and the second heads 49, 51, first and second pistons 55, 57, a receiver 59 and a driver 61. The first and second pistons 55, 57 and the driver 61 correspond to the selector device of the present invention.

As shown in Fig. 8, the first head 49 is formed with a vertically extending first head chamber 49A and a hole 49B through which the first piston 55 is inserted. The hole 49B is provided with a seal 63A. The first piston 55 is movable vertically in the first head chamber 49A. The first piston 55 has a piston rod 55A and a piston head 55B connected to one end of the piston rod 55A.

The first head chamber 49A is divided into a first main chamber 49C on the upper side of the piston head 55B and a first sub-chamber 49D on the lower side of the piston head 55B. The first head 49 has an inlet 49E and an outlet 49F. The inlet 49E is formed in the upper portion of the first head 49 and communicates with the first main chamber 49C. The inlet 49E is connected to the tube 65. The outlet 49F is formed in the lower portion of the first head 49 and communicates with the first sub-chamber 49D. The outlet 49F is connected to the tube 66.

As with the first head 49, the second head 51 is formed with a vertically extending second head chamber 51A and a hole 51B through which the second piston 57 is inserted. The hole 51B is provided with a seal 63B. The second piston 57 is movable vertically in the second head chamber 51A. The second piston 57 has a piston rod 57A and a piston head 57B connected to one end of the piston rod 57A.

The second head chamber 51A is divided into a second main chamber 51C on the upper side of the piston head 57B and a second sub-chamber 51D on the lower side of the piston head 57B. The second head 51 has an outlet 51E communicating with the second main chamber 51C and an inlet 51F communicating with the second sub-chamber 51D.

The tubes 53A to 53J are arranged in parallel to each other at a fixed interval in the subcool condenser 47. Fins 67 are provided between any two adjacent tubes 53A to 53J. Each of the tubes 53A to 53J is connected at one end thereof to the first head 49 and communicates with the first head chamber 49A. Each of the tubes 53A to 53J is connected at the other end thereof to the second head 51 and communicates with the second head chamber 51A. The first head chamber 49A of the first head 49 communicates with the second head chamber 51A of the second head 51 through the tubes 53A to 53J. In the subcool condenser 47, each of the tubes 53A to 53J functions as a condenser and a subcooler. In the subcool condenser 47, the number of tubes such as 53A should be three or more.

The receiver 59 is provided with an inlet passage 59A and an outlet passage 59B. The receiver 59 is formed therein with a reservoir chamber 59C communicating with the inlet passage 59A and the outlet passage 59B. The lower portion of the reservoir chamber 59C forms a storage chamber 59D. The inlet passage 59A is connected to the outlet 51E of the second head 51, and the outlet passage 59B is connected to the inlet 51F of the second head 51. The receiver 59 is connected to the second head 51, and the reservoir chamber 59C communicates with the second head chamber 51A.

As shown in Fig. 7, the driver 61 is electrically connected to the controller 11A and the controller 11A controls the operation of the driver 61. The controller 11a stores data of the saturated vapor pressure of the working fluid.

The driver 61 is connected to the ends of the piston rods 55A, 57A of the first and second pistons 55, 57. Although not shown in the drawing, the driver 61 has a known motor and gear mechanism and is operated under the control of the controller 11A so that the first and second pistons 55, 57 are vertically moved together in the respective first and second head chambers 49A, 51A of the first and second heads 49, 51 (see Fig. 8).

The temperature and pressure sensor 48 is electrically connected to the controller 11A. The temperature and pressure sensor 48 monitors the temperature and the pressure of the working fluid exiting the subcool condenser 47 and flowing in the tube 66, that is, the temperature and the pressure of the working fluid entering the second pump P2. In other words, the temperature and pressure sensor 48 monitors the state of the working fluid based on the temperature and the pressure of the working fluid entering the second pump P2. The temperature and pressure sensor 48 sends a value corresponding to the state of the working fluid to the controller 11A. The other elements or components of the waste heat recovery system are similar to their counterpart elements or components of the waste heat recovery system of the first embodiment.

Also in the waste heat recovery system of the third embodiment, high-temperature and high-pressure working fluid exiting the boiler 21 is decompressed in the expander 23, as in the case of the first embodiment. The working fluid exiting the outlet 23B of the expander 23 flows through the tube 65 and enters the first main chamber 49C of the first head 49 of the subcool condenser 47. Then, the controller 11A operates the fan 47A.

If the controller 11A determines that the required output of the engine 5 is low and the required cooling load for the compressed air is below a threshold, the controller 11A controls the driver 61 so that the first and second pistons 55, 57 are moved downward together in the respective first and second head chambers 49A, 51A of the first and second heads 49, 51. By doing so, in the first head chamber 49A, the ratio of the first main chamber 49C becomes larger than that of the first sub-chamber 49D. Also in the second head chamber 51A, the ratio of the second main chamber 51C becomes larger than that of the second sub-chamber 51D. Thus, in the tubes 53A to 53J connected to the first and second heads 49, 51, the volume in the tubes communicating with the first and second main chambers 49C, 51C becomes larger than the volume in the tubes communicating with the first and second sub-chambers 49D, 51D.

Specifically, of the tubes 53A to 53J, the tube 53A to 53G communicate with the first and second main chambers 49C, 51c, while the tubes 53H to 53J communicate with the first and second sub-chambers 49D, 51D. After flowing from the tube 65 into the first main chamber 49C, the working fluid flows through the tubes 53A to 53G where heat of the working fluid is released into the air around the subcool condenser 47, and then enters the second main chamber 51C. That is, of the tubes 53A to 53J, the tubes 53A to 53G function as a condenser.

The working fluid flowed into the second main chamber 51C then flows through the inlet passage 59A into the reservoir chamber 59C of the receiver 59, where the working fluid is separated into vapor phase fluid and liquid phase fluid. The liquid phase working fluid is stored in the storage chamber 59D and then flows through the outlet passage 59B into the second sub-chamber 51D. The working fluid flowing through the tubes 53H to 53J is supercooled and enters the first sub-chamber 49D. That is, of the tubes 53A to 53J, the tubes 53H to 53J function as a subcooler. The subcooled working fluid exits the first head 49 and then flows through the tube 66 into the second pump P2.

If the controller 11A determines that the required output of the engine 5 is high and the required cooling load for the compressed air exceeds the threshold, the controller 11A controls the driver 61 so that the first and second pistons 55, 57 are moved upward together in the respective first and second head chambers 49A, 51A of the first and second heads 49, 51. By doing so, in the first head chamber 49A, the ratio of the first sub-chamber 49D becomes larger than that of the first main chamber 49C. Also in the second head chamber 51A, the ratio of the second sub-chamber 51D becomes larger than that of the second main chamber 51C. Thus, in the tubes 53A to 53J connected to the first and second heads 49, 51, the volume in the tubes communicating with the first and second sub-chambers 49D, 51D becomes larger than the volume in the tubes communicating with the first and second main chambers 49C, 51C.

Specifically, of the tubes 53A to 53J, the tube 53A to 53C communicate with the first and second main chambers 49C, 51c, while the tubes 53D to 53J communicate with the first and second sub-chambers 49D, 51D. After flowing from the tube 65 into the first main chamber 49C, the working fluid flows through the tubes 53A to 53C and then enters the second main chamber 51C. That is, of the tubes 53A to 53J, the tubes 53A to 53C function as a condenser.

After exiting the receiver 59, the liquid phase working flowing through the tubes 53D to 53J is supercooled and enters the first sub-chamber 49D. That is, of the tubes 53A to 53J, the tubes 53D to 53J function as a subcooler. The subcooled working fluid exits the first head 49 and then flows through the tube 66 into the second pump P2, as in the case of Fig. 8.

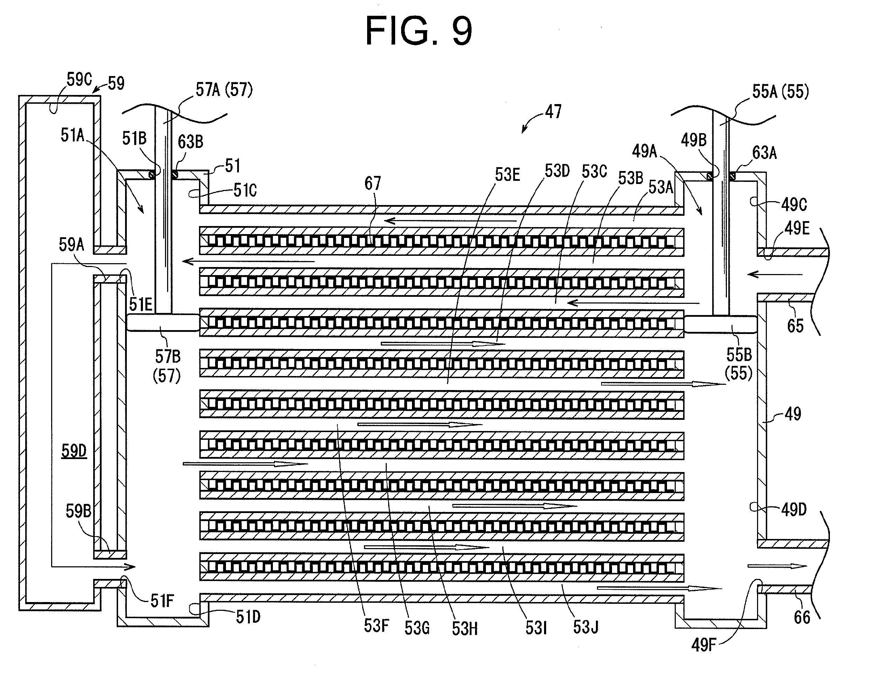

As described above, in the subcool condenser 47 of the waste heat recovery system of the third embodiment, the ratio in volume between the first main chamber 49C and the first sub-chamber 49D in the first head chamber 49A and the ratio in volume between the second main chamber 51C and the second sub-chamber 51D in the second head chamber 51A are changed in the same manner by integral vertical movement of the first and second pistons 55, 57 in the first and second heads 49, 51. In the subcool condenser 47, the numbers of tubes functioning as a condenser and of tubes functioning as a subcooler are changeable. Thus, if the controller 11A determines that the required cooling load for the compressed air is below the threshold, the number of tubes functioning as a condenser is increased, while the number of tubes functioning as a subcooler is decreased, as shown in Fig. 8. That is, the ratio of condenser becomes larger than that of subcooler in the subcool condenser 47. Thus, the waste heat recovery system of the third embodiment prevents excessive cooling of the working fluid and hence allows increased recovery of energy by the Rankine cycle device 3A. If the controller 11A determines that the required cooling load for the compressed air exceeds the threshold, as shown in Fig. 9, the number of tubes functioning as a condenser is decreased, while the number of tubes functioning as a subcooler is increased. That is, the ratio of subcooler becomes larger than that of condenser in the subcool condenser 47. Thus, even when the required cooling load for the compressed air is high, the waste heat recovery system of the third embodiment can meet the requirement of high cooling load, resulting in sufficient cooling of the compressed air and hence increased output of the engine 5. In this case, the amount of electric power recovered in the Rankine cycle device 3A is decreased.

In addition, the controller 11A compares the temperature and the pressure of the working fluid monitored by the temperature and pressure sensor 48, that is, the value corresponding to the state of the working fluid, with the data of the saturated vapor pressure of the working fluid. When the ratio of condenser to subcooler in the subcool condenser 47 is changed as described above, the controller 11A controls the operation of the driver 61 so that the pressure of the working fluid flowing in the tube 66 is above the vapor saturation pressure, as well as based on the required cooling load for compressed air. Specifically, the controller 11A compares the value corresponding to the required cooling load for compressed air with the value corresponding to the state of the working fluid, and then controls the operation of the driver 61 depending on the larger value between the value corresponding to the required cooling load and the value corresponding to the state of the working fluid. In this way, the waste heat recovery system of the third embodiment prevents cavitation of the working fluid in the second pump P2 while subcooling the working fluid in the subcooler of the subcool condenser 47. This prevents damage on the second pump P2, resulting in increased durability of the waste heat recovery system. The waste heat recovery system can also meet the required cooling load for the compressed air. That is, the waste heat recovery system of the third embodiment offers increased durability of the system and improved performance of the engine 5. The waste heat recovery system of the third embodiment also offers the advantages similar to those of the first embodiment.

Thus, also the waste heat recovery system of the third embodiment can selectively give priority to increasing the recovery of electric power in the Rankine cycle device 3A or increasing the output of the engine 5.

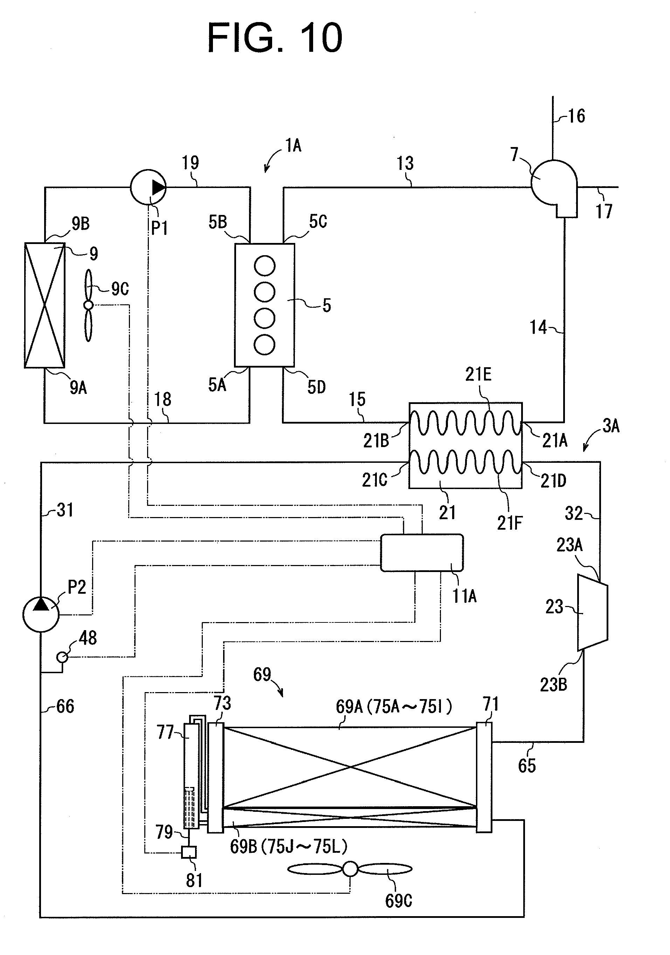

Figs. 10, 11 and 12 show the fourth embodiment of the waste heat recovery system according to the present invention. The fourth embodiment differs from the third embodiment in that a subcool condenser 69 is used instead of the subcool condenser 47 of the third embodiment. An electrically operated fan 69C is provided adjacent to the subcool condenser 69 and electrically connected to the controller 11A.

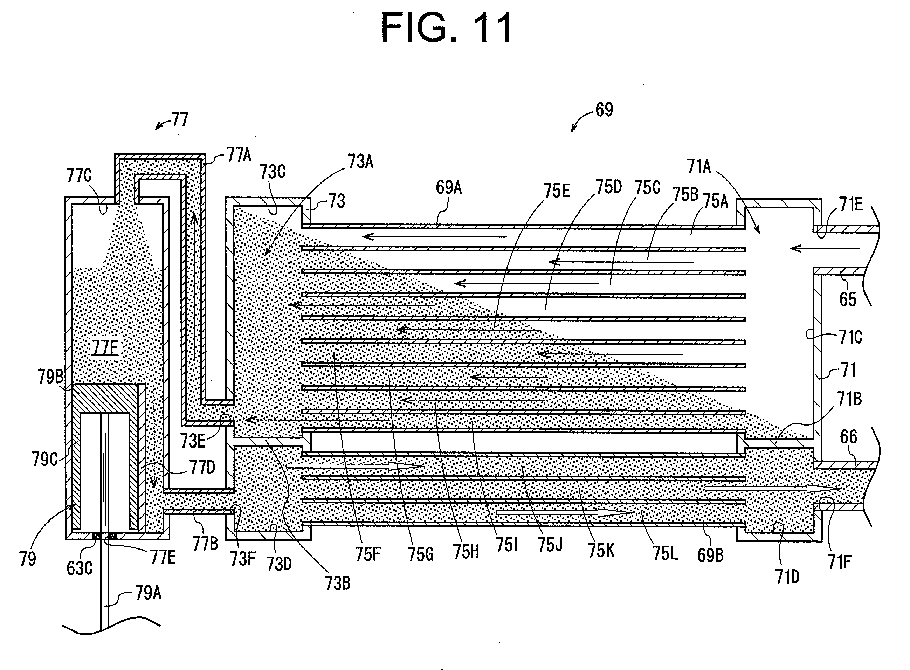

As shown in Figs. 10 and 11, the subcool condenser 69 has vertically extending first and second heads 71, 73, tubes 75A to 75L extending horizontally between the first and the second heads 71, 73, a receiver 77, a piston 79 and a driver 81. The piston 79 and the driver 81 correspond to the volume change device and the selector device of the present invention.

The first head 71 is formed with a vertically extending first head chamber 71A. The first head 71 has a partition wall 71B that divides the first head chamber 71A into a first main chamber 71C and a first sub-chamber 71D. The first head 71 has an inlet 71E and an outlet 71F. The inlet 71E is formed in the upper portion of the first head 71 and communicates with the first main chamber 71C. The inlet 71E is connected to the tube 65. The outlet 71F is formed in the lower portion of the first head 71 and communicates with the first sub-chamber 71D. The outlet 71F is connected to the tube 66.

As with the first head 71, the second head 73 is formed with a vertically extending second head chamber 73A. The second head 73 has a partition wall 73B that divides the second head chamber 73A into a second main chamber 73C and a second sub-chamber 73D. The second head 73 has an outlet 73E and an inlet 73F. The outlet 73E communicates with the second main chamber 73C. The inlet 73F is formed in the lower portion of the second head 73 and communicates with the second sub-chamber 73D.

As shown in Fig. 11, the tubes 75A to 75L are arranged in parallel to each other at a fixed interval in the subcool condenser 69. Although not shown in the drawing, fins are provided between any two adjacent tubes 75A to 75L, as in the case of Figs. 8, 9. Each of the tubes 75A to 75L is connected at one end thereof to the first head 71 and communicates with the first head chamber 71A. Each of the tubes 75A to 75L is connected at the other end thereof to the second head 73 and communicates with the second head chamber 73A. The first head chamber 71A of the first head 71 communicates with the second head chamber 73A of the second head 73 through the tubes 75A to 75L. Specifically, of the tubes 75A to 75L, the tube 75A to 751 communicate with the first and second main chambers 71C, 73C, while the tubes 75J to 75L communicate with the first and second sub-chambers 71D, 73D. In the subcool condenser 69, the tube 75A to 751 cooperate to form an upper heat exchanger 69A, and the tube 75J to 75L cooperate to form a lower heat exchanger 69B. Also in the subcool condenser 69, the number of tubes such as 75A should be three or more. The number of tubes such as 75A in the upper and lower heat exchangers 69A, 69B may be selected suitably.

The receiver 77 is provided with an inlet passage 77A and an outlet passage 77B. The receiver 77 is formed therein with a reservoir chamber 77C communicating with the inlet passage 77A and the outlet passage 77B. The receiver 77 has therein a partition wall 77D. The receiver 77 further has a hole 77E through which the piston 79 is inserted. The hole 77E is provided with a seal 63C.

The inlet passage 77A is connected to the outlet 73E of the second head 73, and the outlet passage 77B is connected to the inlet 73F of the second head 73. The receiver 77 is connected to the second head 73, and the reservoir chamber 77C communicates with the second head chamber 73A.

In the reservoir chamber 77C of the receiver 77, the piston 79 is movable vertically along the inner wall of the receiver 77 and the partition wall 77D. The piston 79 has a piston rod 79A and a piston head 77B connected to one end of the piston rod 79A. The piston head 79B has a skirt 79C extending downward so as to surround part of the piston rod 79A. Although not shown in the drawing, a seal is provided around the piston head 79B to seal between the piston head 79B and the inner wall of the receiver 77 and between the piston head 79B and the partition wall 77D. In the reservoir chamber 77C, the part except the space defined by the piston head 79B, the inner wall of the receiver 77 and the partition wall 77D functions as a storage chamber 77F.

As shown in Fig. 10, the driver 81 is electrically connected to the controller 11A and the controller 11A controls the operation of the driver 81.

The driver 81 is connected to the ends of the piston rod 79A of the piston 79. As with the drive 61 of Fig. 7, the driver 81 has a known motor and gear mechanism (not shown) and is operated under the control of the controller 11A so that the piston 79 is vertically moved in the reservoir chamber 77C of the receiver 77 (see Fig. 11). Other elements or components of the waste heat recovery system are similar to their counterpart elements or components of waste heat recovery system of the first and third embodiments.

Also in the waste heat recovery system of the fourth embodiment, as in the case of the third embodiment, the working fluid flowed out of the expander 23 flows through the tube 65 and enters the first main chamber 71C of the first head chamber 71A of the subcool condenser 69. Then, the controller 11A operates the fan 69C.

The working fluid flowed into the first main chamber 71C of the first head 71 then flows through the tubes 75A to 751, or the upper heat exchanger 69A, toward the second head 73. In this case, in the region away from the inlet 71E or the tube 65 as indicated by dot, the working fluid is cooled and liquefied by releasing heat to the air around the subcool condenser 69. Thus, in the region of the upper heat exchanger 69A indicated by dot, the working fluid is substantially subcooled. That is, in the subcool condenser 69, the upper heat exchanger 69A has a region functioning as a condenser and a region functioning as a subcooler.

The working fluid flowed into the second main chamber 73C of the second head 73 then flows through the inlet passage 77A into the storage chamber 77F of the reservoir chamber 77C of the receiver 77. In this case, all of the working fluid is in the liquid phase, differently from the case that the working flows through the upper heat exchanger 69A. The working fluid flowed through the outlet passage 77B into the second sub-chamber 73D flows through the tubes 75J to 75L, or the lower heat exchanger 69B, while being supercooled, and then enters the first sub-chamber 71D. That is, in the subcool condenser 69, the lower heat exchanger 69B functions as a subcooler. The subcooled working fluid exits the first head 71 and then flows through the tube 66 into the second pump P2.

If the controller 11A determines that the required output of the engine 5 is low and the required cooling load for the compressed air is below a threshold, the controller 11A controls the driver 81 so that the piston 79 is moved downward in the reservoir chamber 77C. By doing so, the volume of the storage chamber 77F in the reservoir chamber 77C is increased, and a larger amount of the working fluid liquefied in the upper heat exchanger 69A flows into the reservoir chamber 77C. As a result, in the upper heat exchanger 69A, the region functioning as a condenser is increased. In this case, in the subcool condenser 69, about a half or more of the upper heat exchanger 69A functions as a condenser to release heat from the working fluid, while the rest of the upper heat exchanger 69A cooperates with the lower heat exchanger 69B to subcool the working fluid. That is, the ratio of condenser in the upper heat exchanger 69A becomes larger than the ratio of subcooler in the upper heat exchanger 69A.

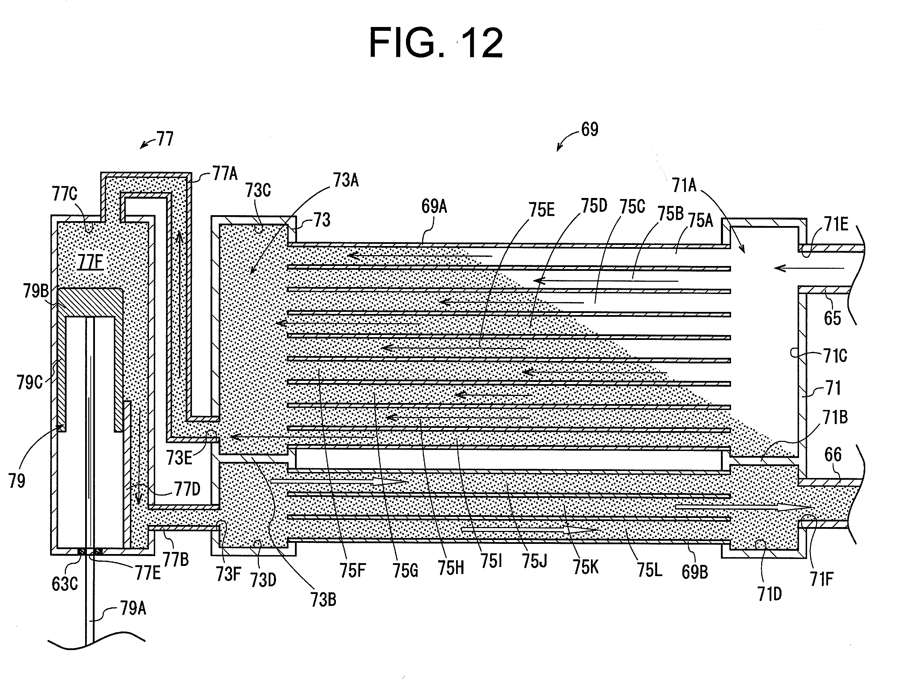

If the controller 11A determines that the required output of the engine 5 is high and the required cooling load for the compressed air exceeds the threshold, the controller 11A controls the driver 81 so that the piston 79 is moved upward in the reservoir chamber 77C, as shown in Fig. 12. By doing so, the volume of the storage chamber 77F in the reservoir chamber 77C is decreased, and then the reservoir chamber 77C is filled up with the working fluid. The overflowed liquid phase working fluid flows into the upper heat exchanger 69A thereby to function as a subcooler. As a result, in upper heat exchanger 69A, the volume of the region functioning as a subcooler becomes larger than the volume functioning substantially as a subcooler. In this case, in the subcool condenser 69, about 30 percent of the upper heat exchanger 69A functions as a condenser to release heat from the working fluid, while about 70 percent of the upper heat exchanger 69A cooperates with the lower heat exchanger 69B to subcool the working fluid. That is, the ratio of subcooler in the upper heat exchanger 69A becomes larger than the ratio of condenser in the upper heat exchanger 69A.

As described above, in the subcool condenser 69 of the waste heat recovery system of the fourth embodiment, the volume of the storage chamber 77F is changed by vertical movement of the piston 79. In the upper heat exchanger 69A of the subcool condenser 69, the ratio of the region functioning as a condenser and the ratio of the region functioning substantially as a subcooler, in other words, of the tubes 75a to 75I, the ratio in volume functioning as a condenser and the ratio in volume functioning as a subcooler are changeable. Thus, the waste heat recovery system can change the ratio of the region functioning as a condenser and the ratio of the region functioning substantially as a subcooler in the upper heat exchanger 69A depending on the required cooling load for the compressed air while maintaining the lower heat exchanger 69B or the tubes 75J to 75L functioning as a subcooler, thereby allowing increased recovery of energy in the Rankine cycle device 3a and increased output of the engine 5.

Also in the waste heat recovery system of the fourth embodiment, when the ratio of the region functioning as a condenser to the ratio of the region functioning substantially as a subcooler in the upper heat exchanger 69A of the subcool condenser 69 is changed, the controller 11A controls the operation of the driver 61 so that the pressure of the working fluid flowing in the tube 66 is above the vapor saturation pressure, depending on the larger value between the value corresponding to the required cooling load for the compressed air and the value corresponding to the state of the working fluid. The waste heat recovery system of the fourth embodiment also offers the advantages similar to those of the first and third embodiments.

Also the waste heat recovery system of the fourth embodiment can selectively give priority to increasing the recovery of electric power in the Rankine cycle device 3A or increasing the output of the engine 5.

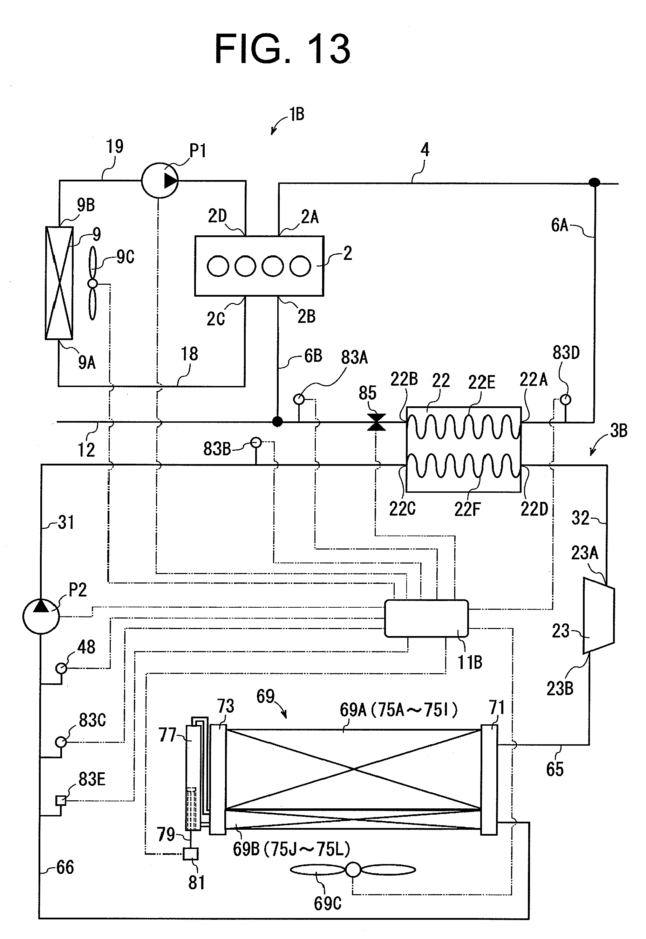

Fig. 13 shows the fifth embodiment of the waste heat recovery system according to the present invention. The waste heat recovery system of the fifth embodiment is also installed in a vehicle and used with a power unit 1B of the vehicle. The waste heat recovery system includes a Rankine cycle device 3B, temperature sensors 83A to 83D, a pressure sensor 83E and a controller 11B. The controller 11B corresponds to the determination device of the present invention.

The power unit 1B has an internal combustion engine 2, a tube 4, tubes 6A, 6B as an exhaust gas recirculation passage, and a tube 12. The temperature sensor 83D is provided in the tube 6A. The temperature sensor 83A and a regulator valve 85 are provided in the tube 6B. As with the power unit 1A of the first embodiment, the power unit 1B has the radiator 9, the fan 9C, the tubes 18, 19, and the first pump P1. The fan 9C and the first pump P1 are electrically connected to the controller 11B.

The engine 2 is a conventional water-cooled diesel engine having a water jacket (not shown) through which LLC or long life coolant flows. The engine 2 has an outlet 2A for discharging exhaust gas and an inlet 2B for introducing mixture which will be described later. The engine 2 further has an inlet 2D and an outlet 2C through which coolant flows into and out of the water jacket.

The tube 4 is connected at one end thereof to the outlet 2A of the engine 2 and at the other end thereof to a muffler (not shown) of the vehicle. Exhaust gas exiting the engine 2 is delivered through the tube 4 to the muffler.

The tube 6A is connected at one end thereof to the tube 4 and at the other end thereof to a first inlet 22A of a boiler 22 which is described in detail below. The tube 6B is connected at one end thereof to a first outlet 22B of the boiler 22 and at the other end thereof to the inlet 2B of the engine 2. The tube 12 is connected at one end thereof to the tube 6B and at the other end thereof to an air intake (not shown) of the vehicle. Outdoor air is introduced through the tube 12 into the tube 6B. Part of the exhaust gas flowing through the tube 4 is delivered through the tubes 6A, 6B, and mixture of such recirculation exhaust gas as intake fluid and intake air is introduced into the engine 2.

The regulator valve 85 is electrically connected to the controller 11B. The adjustment of the flow rate of the exhaust gas flowing from the tube 4 into the tube 6A is accomplished by adjusting the opening of the regulator valve 85.

The temperature sensors 83A, 83D are electrically connected to the controller 11B. The temperature sensor 83A monitors the temperature of recirculation exhaust gas exiting the first outlet 22B of the boiler 22 and flowing through the tube 6B, and sends the monitored data to the controller 11B. The temperature sensor 83D monitors the temperature of recirculation exhaust gas flowing through the tube 6A and entering the first inlet 22A of the boiler 22, and sends the monitored data to the controller 11B.

The tube 18 is connected at one end thereof to the outlet 2C of the engine 2 and at the other end thereof to the inlet 9A of the radiator 9. The tube 19 is connected at one end thereof to the outlet 9B of the radiator 9 and at the other end thereof to the inlet 2D of the engine 2.

The Rankine cycle device 3B differs from the Rankine cycle device 3A of the fourth embodiment in that the boiler 22 is used instead of the boiler 21. The second pump P2, the temperature and pressure sensor 48, the fan 69C and the driver 81 are electrically connected to the controller 11B.

The boiler 22 has a second inlet 22C and a second outlet 22D, as well as the aforementioned first inlet 22A and first outlet 22B. The boiler 22 is formed therein with a first passage 22E connecting between the first inlet 22A and the first outlet 22B and a second passage 22F connecting between the second inlet 22C and the second outlet 22D. In the boiler 22, heat exchange occurs between the recirculation exhaust gas flowing in the first passage 22E and the working fluid flowing in the second passage 22F, so that the recirculation exhaust gas is cooled and the working fluid is heated.

The tube 31 connects between the second pump P2 and the second inlet 22C of the boiler 22. The tube 32 connects between the second outlet 22D of the boiler 22 and the inlet 23A of the expander 23.

The temperature sensor 83B is provided in the tube 31. The temperature sensor 83C and the pressure sensor 83E are provided in the tube 66. The temperature sensors 83B, 83C and the pressure sensor 83E are electrically connected to the controller 11B.

The temperature sensor 83B monitors the temperature of working fluid flowing through the tube 31 and entering the second inlet 22C of the boiler 22. The temperature sensor 83B sends the monitored data to the controller 11B.

The temperature sensor 83C monitors the temperature of working fluid flowing through the tube 66 and entering the second pump P2. The temperature sensor 83C sends the monitored data to the controller 11B.

The pressure sensor 83E monitors the pressure of working fluid flowing through the tube 66, that is, the pressure of the working fluid present downstream of the expander 23 and upstream of the second pump P2 (condensation pressure). The pressure sensor 83E sends the monitored data to the controller 11B. The pressure sensor 83E may be integrated with the temperature sensor 83C and the temperature and pressure sensor 48.

The controller 11B controls the operation of the fans 9C, 69C in such a way that the amount of heat released from the working fluid or the coolant into the outdoor air is properly adjusted. The controller 11B controls also the operation of the regulator valve 85 and the first and second pumps P1, P2. Based on the temperature of recirculation exhaust gas, the temperature of working fluid, and the condensation pressure of working fluid which are monitored by the sensors 83A to 83E, the controller 11B determines the required cooling load for cooling the recirculation exhaust gas. Also the controller 11B stores data of the saturated vapor pressure of the working fluid. Based on the determined required cooling load, the controller 11B controls the operation of the driver 81. The controller 11B controls the operation of the driver 81 so that the pressure of the working fluid flowing in the tube 66 is above the vapor saturation pressure. The other elements or components of the waste heat recovery system are similar to their counterpart elements or components of the waste heat recovery system of the fourth embodiment.

The following will describe the operation of the waste heat recovery system of the present embodiment.

While the engine 2 of the power unit 1B is operating to drive the vehicle, exhaust gas exiting the outlet 2A of the engine 2 is delivered through the tube 4 and discharged out from the muffler (not shown). The controller 11B adjusts the opening of the regulator valve 85 so that part of the exhaust gas in the tube 4 flows into the tube 6A. Exhaust gas flowed into the tube 6A, that is, the recirculation exhaust gas, flows into the boiler 22 through its first inlet 22A, flowing through the first passage 22E and then out of the boiler 22 through its first outlet 22B into the tube 6B. The recirculation exhaust gas flowing through the tube 6B is mixed with the outdoor air introduced through the tube 12, and such mixture enters into the engine 2 through its inlet 2B.

The controller 11B causes the first and second pumps P1, P2 and the fans 9C, 69C to be operated. After cooling the engine 2, the coolant is cooled in the radiator 9 by heat exchange with the outdoor air and then enters the engine 2 again to be used to cool the engine 2.

In the Rankine cycle device 3B, working fluid discharged from the second pump P2 flows in the tube 31 and then enters through the second inlet 22C into the second passage 22F of the boiler 22, where heat exchange occurs between the working fluid and the recirculation exhaust gas flowing through the first passage 22E of the boiler 22. Since the recirculation exhaust gas has a temperature of about 500 degrees C, the working fluid flowing through the second passage 22F of the boiler 22 is suitably heated. The recirculation exhaust gas flowing in the first passage 22E is cooled by releasing heat to the working fluid flowing in the second passage 22F, and then delivered to the engine 2.

After being heated by the boiler 22, high-temperature and high-pressure working fluid flowed out of the second outlet 22D flows through the tube 32 and enters the expander 23 through its inlet 23A. The working fluid is decompressed or expanded in the expander 23 thereby to generate pressure energy that is used to generate electric power in the dynamo connected to the expander 23. Then the working fluid flows through the subcool condenser 69 and enters the second pump P2.

Based on the monitored data from the temperature sensors 83A to 83D and from the pressure sensor 83E, the controller 11B determines the required cooling load for recirculation exhaust gas.

If the temperature monitored by the temperature sensor 83A is low, it can be determined that the recirculation exhaust gas is sufficiently cooled by the heat exchange in the boiler 22. Thus, the controller 11B determines that the required cooling load for the recirculation exhaust gas is low, that is, the required cooling load is below a predetermined threshold.

Similarly, when the temperature monitored by the temperature sensor 83D is low, it can be determined that the temperature of recirculation exhaust gas is low and, therefore, the controller 11B determines that the required cooling load for recirculation exhaust gas is low.

Similarly, when the temperature and pressure monitored by the temperature sensors 83B, 83C and the pressure sensor 83E are low, the temperature of the working fluid is low and hence the capacity of the boiler 22 for cooling the recirculation exhaust gas is high. Therefore, the controller 11B determines that the required cooling load for recirculation exhaust gas is low.

In such cases, since the temperature of the working fluid entering the boiler 22 need not be so low in the Rankine cycle device 3B, the controller 11B controls the operation of the driver 81 as in the case of the fourth embodiment wherein the controller 11A determines that the required output of the engine 5 is low (see Fig. 11).

By doing so, the ratio of condenser in the upper heat exchanger 69A becomes larger than the ratio of subcooler in the upper heat exchanger 69A in the subcool condenser 69. This allows increased recovery of electric power in the Rankine cycle device 3B.

If the temperature monitored by the temperature sensor 83A is high, it can be determined that cooling of recirculation exhaust gas in the boiler 22 is insufficient. The controller 11B determines that the required cooling load for the recirculation exhaust gas is high, that is, the required cooling load exceeds the threshold.

Similarly, when the temperature monitored by the temperature sensor 83D is high, it can be determined that the temperature of the recirculation exhaust gas is high and hence the capacity of the boiler 22 for cooling recirculation exhaust gas is low. Therefore, the controller 11B determines that the required cooling load for the recirculation exhaust gas is high.

Similarly, when the temperature and pressure monitored by the temperature sensors 83B, 83C and the pressure sensor 83E are high, it can be determined that the temperature of the working fluid exiting the subcool condenser 69 is not so low. In this case, it can be determined that the working fluid is heated to a high temperature in the boiler 22, in other words, the recirculation exhaust gas serving as a heat source for heating the working fluid in the boiler 22 has a high temperature. Thus, the controller 11B determines that the required cooling load for the recirculation exhaust gas is high.

In such cases, the temperature of the working fluid entering the boiler 22 needs to be further lowered and, therefore, the controller 11B controls the operation of the driver 81 as in the case of the fourth embodiment wherein that the controller 11A determines that the required output of the engine 5 is high (see Fig. 12).

As a result, in the upper heat exchanger 69A of the subcool condenser 69, the ratio of subcooler becomes larger than the ratio of condenser. Thus, the waste heat recovery system can meet the required cooling load for the recirculation exhaust gas, thereby resulting in an increased ratio of recirculation exhaust gas to the mixture and hence reduction of the amount of nitrogen oxides in exhaust gas discharged through the tube 4 into the atmosphere.

The waste heat recovery system of the present embodiment makes it possible for the controller 11B to properly determine the required cooling load for recirculation exhaust gas based on the temperature of the recirculation exhaust gas and the working fluid monitored by the temperature sensors 83A to 83D and also on the condensation pressure of the working fluid monitored by the pressure sensor 83E. The waste heat recovery system of the fifth embodiment also offers the advantages similar to those of the first, third and fourth embodiments.

Thus, also the waste heat recovery system of the fifth embodiment can selectively give priority to increasing the recovery of electric power in the Rankine cycle device 3B or increasing the output of the engine 2.

It is to be understood that the present invention is not limited to the above-described embodiments, but it may be modified in various ways without departing from the scope of the invention.

In the first and second embodiments, the waste heat recovery systems may be provided with a sensor such as 48 that is used in the third, fourth and fifth embodiments and the controller 11A may control the operation of the valves V1 to V6 so that the pressure of the working fluid flowing in the tube 30 does not fall below the saturated vapor pressure. In this case, the controller 11A may also control the operation of the valves V1 to V6 depending on the larger value between the value corresponding to the required cooling load and the temperature and pressure monitored by the sensor, that is, the value corresponding to the state of the working fluid.

In the first to fourth embodiments, the Rankine cycle device 3A may have an exhaust gas boiler such as 22 instead of the boiler 21 so that the waste heat recovery system is used with a power unit such as 1B (see Fig. 13).

In the waste heat recovery system of the fifth embodiment, the controller 11B may determine the required cooling load for the recirculation exhaust gas based on the required output of the engine 2 which may be determined from the accelerator pedal position of the vehicle. In this case, the controller 11B may determine the required cooling load for the recirculation exhaust gas based on combination of the temperature and pressure monitored by the sensors 83A to 83E with the required output of the engine 2. Alternatively, the waste heat recovery system of the fifth embodiment may dispense with the sensors 83A to 83E and the controller 11B may determine the required cooling load for the recirculation exhaust gas only based on the required output of the engine 2.

The waste heat recovery system of the fifth embodiment may be modified in such a way that any one of the sensors 83A to 83E is used, or any combination of such sensors 83A to 83E is used.

In the first to fourth embodiments, the waste heat recovery system may be provided with any of the sensors such as 83A to 83E which are used in the fifth embodiment so that the required cooling load for the compressed air is determined based on the temperature or pressure monitored by the sensor. In this case, the system may have all of the sensors such as 83A to 83E or have only one of such sensors. Alternatively, the system may have any combination of such sensors. The controller 11A may determine the required cooling load for the compressed air based on the required output of the engine 5 and the temperature or pressure monitored by the sensors such as 83A to 83E, or based on the temperature or pressure monitored by the sensors 83A to 83E.

In the first to fifth embodiments, the controllers 11A, 11B may be configured to determine the required cooling load for the compressed air or the recirculation exhaust gas based on vehicle speed. In such a case, if the vehicle speed exceeds a predetermined value, heat is suitably released from the working fluid in the heat exchangers 25 to 27 and in the subcool condensers 47, 69, so that the temperature of the working fluid flowing in the tubes 30, 66 is decreased. In other words, the condensation pressure of the working fluid flowing in the tubes 30, 66 is then decreased. In this case, the compressed air can be suitably cooled in the boiler 21, and the recirculation exhaust gas also can be suitably cooled in the boiler 22. Thus, the controllers 11A, 11B can determine that the required cooling load for the compressed air or the recirculation exhaust gas is low. On the other hand, if the vehicle speed is below a predetermined value, the capacity of the heat exchangers 25 to 27 and the subcool condensers 47, 69 for cooling the working fluid becomes lower and hence the temperature of the working fluid flowing in the tubes 30, 66, that is, the condensation pressure of the working fluid flowing in the tubes 30, 66 is increased. In this case, the compressed air cannot be cooled sufficiently in the boiler 21, and the recirculation exhaust gas cannot be cooled sufficiently in the boiler 22, either. Thus, the controllers 11A, 11B can determine that the required cooling load for the compressed air or the recirculation exhaust gas is high. The controllers 11A, 11B may determine the required cooling load for the compressed air or recirculation exhaust gas only based on the monitored vehicle speed, or based on any combination of the monitored vehicle speed with the required output of the engines 2, 5, the temperatures monitored by the temperature sensors 83A to 83D and the pressure monitored by the pressure sensor 83E.

In the first to fourth embodiment, an exhaust gas boiler such as 22 may be provided in addition to the boiler 21. Similarly, in the fifth embodiment, a compressed air boiler such as 21 may be provided in addition to the boiler 22.

In the first to fifth embodiments, the waste heat recovery system may be provided with any boiler other than those which are used in the above-described embodiments. Such boiler may be configured for heat exchange between the working fluid and the engine coolant, between the working fluid and the lubricating oil for the engines 2, 5, or between the working fluid and the exhaust gas other than the recirculation exhaust gas. In such cases, the working fluid can be suitably heated by the waste heat of the engines 2, 5 through the coolant, thereby allowing increased recovery of electric power in the Rankine cycle devices 3A, 3B. In addition, the coolant can also be cooled by heat exchange with the working fluid, thereby allowing suitable cooling of the engines 2, 5 while reducing the size of the cooling device such as the radiator 9.

In the first and second embodiments, the valves V1, V2 may be replaced by a distributing valve that allows the working fluid exiting the outlet 25B of the first heat exchanger 25 to selectively flow through the tube 34 or through the tube 36. Such distributing valve should preferably be provided at the connection of the tubes 34, 36. Similarly, the valves V3, V4 may be replaced by a distributing valve that allows the working fluid exiting the outlet 26B of the second heat exchanger 26 to selectively flow through the tube 35 or through the tube 37. Such distributing valve should preferably be provided at the connection of the tubes 35, 37.

In the first embodiment, the valves V5, V6 may be replaced by a distributing valve that allows the working fluid exiting the outlet 29B of the receiver 29 to selectively flow through the tube 38 or through the tube 39. Such distributing valve should preferably be provided at the connection of the tubes 38, 39 and 41. Such distributing valves should preferably be electrically connected to the controller 11A and controlled by the controller 11A. Such distributing valves correspond to the selector valves of the present invention.

In the fourth embodiment, the piston 79 and the driver 81 may be replaced by any suitable volume change device or selector device that can change the volume of the storage chamber 77F by means such as pressure and heat. Such device includes, for example, a diaphragm, a bellows and a thermostat.

The present invention is applicable to a vehicle.

The waste heat recovery system includes a Rankine cycle device in which working fluid circulates through a pump, a boiler, an expander and then through a heat exchanging device, heat exchange occurs in the boiler between the working fluid and intake fluid that is introduced into an internal combustion engine while being cooled. The heat exchanging device includes a condenser condensing the working fluid, a receiver connected downstream of the condenser and storing liquid-phase working fluid, a subcooler connected downstream of the receiver and subcooling the liquid-phase working fluid, and a selector device serving to change the ratio of the condenser to the subcooler. The waste heat recovery system further includes a determination device for determining required cooling load for the intake fluid, and a controller for controlling the selector device depending on the required cooling load determined by the determination device.

## Claims

1. A waste heat recovery system for use with a power unit (1A, 1B) that includes an internal combustion engine (2, 5), comprising:
a Rankine cycle device (3A, 3B) in which working fluid circulates through a pump (P2), a boiler (21, 22), an expander (23) and then through a heat exchanging device, heat exchange occurs in the boiler (21, 22) between the working fluid and intake fluid that is introduced into the internal combustion engine (2, 5) while being cooled;
**characterized by**
the heat exchanging device comprising:
a condenser (25, 26, 53A to 53G, 53A to 53C, 69A) condensing the working fluid;
a receiver (29, 43, 45, 59, 77) connected downstream of the condenser (25, 26, 53A to 53G, 53A to 53C, 69A) and storing liquid-phase working fluid;
a subcooler (26, 27, 53H to 53J, 53D to 53J, 69A, 69B) connected downstream of the receiver (29, 43, 45, 59, 77) and subcooling the liquid-phase working fluid; and
a selector device (36 to 39, V1 to V6, 55, 57, 61, 79, 81) serving to change the ratio of the condenser to the subcooler,
the waste heat recovery system further comprising:
a determination device (11A, 11B) for determining required cooling load for the intake fluid; and
a controller (11A, 11B) for controlling the selector device depending on 25 the required cooling load determined by the determination device (11A, 11B).

2. The waste heat recovery system according to claim 1, wherein the heat exchanging device includes serially connected plural heat exchangers (25, 26, 27), the selector device allows the receiver (29) to be connected downstream of any of the heat exchangers (25, 26, 27).

3. The waste heat recovery system according to claim 2, wherein the plural heat exchangers is provided by a first heat exchanger (25) connected downstream of the expander (23), a second heat exchanger (26) connected downstream of the first heat exchanger (25) through a first connecting tube (34), and a third exchanger (27) connected downstream of the second heat exchanger (26) through a second connecting tube (35),
wherein the selector device selectively connects the receiver (29) to the first connecting tube (34) or to the second connecting tube (35) depending on the required cooling load determined by the determination device (11A).

4. The waste heat recovery system according to claim 3, wherein the receiver is single, the selector device includes:
a first branch tube (36) connecting the first connecting tube (34) upstream of the receiver (29);
a second branch tube (37) connecting the second connecting tube (35) upstream of the receiver (29);
a first return tube (38) connecting the first connecting tube (34) downstream of the receiver (29) at a position downstream of the first branch tube (36);
a second return tube (39) connecting the second connecting tube (35) downstream of the receiver (29) at a position downstream of the second branch tube (37);
a first selector valve allowing the working fluid to selectively flow into the second heat exchanger (26) or into the first branch tube (36);
a second selector valve allowing the working fluid to selectively flow into the third heat exchanger (27) or into the second branch tube (37); and
a third selector valve allowing the working fluid to selectively flow into the first return tube (38) or into the second return tube (39),
wherein the controller (11A) controls the first selector valve, the second selector valve and the third selector valve.

5. The waste heat recovery system according to claim 4, wherein the first selector valve is provided by a first branch valve (V1) and a first connecting valve (V2), the second selector valve is provided by a second branch valve (V3) and a second connecting valve (V4), the third selector valve is provided by a first return valve (V5) and a second return valve (V6), the first branch valve (V1) selectively allows or blocks the flow of working fluid through the first branch tube (36), the second branch valve (V3) selectively allows or blocks the flow of working fluid through the second branch tube (37), the first connecting valve (V2) selectively allows or blocks the flow of working fluid through the first connecting tube (34), the second connecting valve (V4) selectively allows or blocks the flow of working fluid through the second connecting tube (35), the first return valve (V5) selectively allows or blocks the flow of working fluid through the first return tube (38), the second return valve (V6) selectively allows or blocks the flow of working fluid through the second return tube (39).

6. The waste heat recovery system according to claim 3, wherein the receiver is provided by a first receiver (43) and a second receiver (45), the selector device includes:
a first branch tube (36) connecting the first connecting tube (34) upstream of the first receiver (43);
a second branch tube (37) connecting the second connecting tube (35) upstream of the second receiver (45);
a first return tube (38) connecting the first connecting tube (34) downstream of the first receiver (43) at a position downstream of the first branch tube (36);
a second return tube (39) connecting the second connecting tube (35) downstream of the second receiver (45) at a position downstream of the second branch tube (37);
a first selector valve allowing the working fluid to selectively flow into the second heat exchanger (26) or into the first branch tube (36); and
a second selector valve allowing the working fluid to selectively flow into the third heat exchanger (27) or into the second branch tube (37),
wherein the controller (11A) controls the first selector valve and the second selector valve.

7. The waste heat recovery system according to claim 6, wherein the first selector valve is provided by a first branch valve (V1) and a first connecting valve (V2), the second selector valve is provided by a second branch valve (V3) and a second connecting valve (V4), the first branch valve (V1) selectively allows or blocks the flow of working fluid through the first branch tube (36), the second branch valve (V3) selectively allows or blocks the flow of working fluid through the second branch tube (37), the first connecting valve (V2) selectively allows or blocks the flow of working fluid through the first connecting tube (34), the second connecting valve (V4) selectively allows or blocks the flow of working fluid through the second connecting tube (35).

8. The waste heat recovery system according to claim 1, wherein the heat exchanging device includes a subcool condenser (47), the subcool condenser (47) includes:
a first head (49) having a first head chamber (49A);
a second head (51) having a second head chamber (51A);
tubes (53A to 53J) connecting between the first head (49) and the second head (51) so that the first head chamber (49A) communicates with the second head chamber (51A);
a first piston (55) movable in the first head chamber (49A) and dividing the first head chamber (49A) into a first main chamber (49C) and a first sub-chamber (49D);
a second piston (57) movable in the second head chamber (51A) and dividing the second head chamber (51A) into a second main chamber (51C) and a second sub-chamber (51D);
a driver (61) for driving the first piston (55) and the second piston (57); and
the receiver (59) communicating with the first main chamber (49C) and the first sub-chamber (49D) or with the second main chamber (51 C) and the second sub-chamber (51 D),
wherein the first piston (55), the second piston (57) and the driver (61) serve as the selector device.

9. The waste heat recovery system according to claim 1, wherein the heat exchanging device includes a subcool condenser (69), the subcool condenser (69) includes:
a first head (71) having a first head chamber (71A);
a second head (73) having a second head chamber (73A);
tubes (75A to 75L) connecting between the first head (71) and the second head (73) so that the first head chamber (71A) communicates with the second head chamber (73A);
the receiver (77) communicating with the second head chamber (73A) and having a storage chamber (77F); and
a volume change device (79, 81) serving to change the volume of the storage chamber (77F),
wherein the volume change device (79, 81) serves as the selector device.

10. The waste heat recovery system according to any one of claims 1 through 9, further comprising a sensor (11A) for monitoring required output of the internal combustion engine (5), wherein the determination device (11A) determines the required cooling load for the intake fluid based on the required output monitored by the sensor (11A), or
further comprising a sensor (83A) for monitoring the temperature of the intake fluid exiting the boiler (22), wherein the determination device (11B) determines the required cooling load for the intake fluid based on the temperature monitored by the sensor (83A), or
further comprising a sensor (83B) for monitoring the temperature of the working fluid entering the boiler (22), wherein the determination device (11B) determines the required cooling load for the intake fluid based on the temperature monitored by the sensor (83B), or
further comprising a sensor (83D) for monitoring the temperature of the intake fluid entering the boiler (22), wherein the determination device (11B) determines the required cooling load for the intake fluid based on the temperature monitored by the sensor (83D), or
further comprising a sensor (83C) for monitoring the temperature of the working fluid entering the pump (P2), wherein the determination device (11B) determines the required cooling load for the intake fluid based on the temperature monitored by the sensor (83C), or
further comprising a sensor (83E) for monitoring the pressure of the working fluid present downstream of the expander (23) and upstream of the pump (P2), wherein the determination device (11B) determines the required cooling load for the intake fluid based on the pressure monitored by the sensor (83E).

11. The waste heat recovery system according to any one of claims 1 through 9, further comprising a sensor (48) for monitoring the state of the working fluid based on the temperature and the pressure of the working fluid entering the pump (P2), wherein the controller (11A) controls the selector device (55, 57, 61) so as to prevent cavitation of the working fluid in the pump (P2) based on a value corresponding to the state of the working fluid monitored by the sensor (48).

12. The waste heat recovery system according to claim 11, wherein the controller (11A) controls the selector device (55, 57, 61) based on a larger value between a value corresponding to the required cooling load and the value corresponding to the state of the working fluid.

13. The waste heat recovery system according to claim 1, wherein the power unit (1A) has a forced-induction compressor (7) for supplying compressed air to the internal combustion engine (5), and heat exchange between the compressed air and the working fluid occurs in the boiler (21).

14. The waste heat recovery system according to claim 1, wherein the power unit (1B) has an exhaust gas recirculation passage (6A, 6B) through which part of the exhaust gas exiting the internal combustion engine (2) is recirculated into the internal combustion engine (2) as recirculation exhaust gas, and heat exchange between the recirculation exhaust gas and the working fluid occurs in the boiler (22).
